(19) Europäisches Patentamt / European Patent Office / Office européen des brevets

(11) **EP 2 909 580 B1**

(12) **FASCICULE DE BREVET EUROPEEN**

(45) Date de publication et mention
de la délivrance du brevet:
**05.09.2018 Bulletin 2018/36**

(21) Numéro de dépôt: **13789854.0**

(22) Date de dépôt: **16.10.2013**

(51) Int Cl.:
***G01C 21/16*** *(2006.01)*

(86) Numéro de dépôt international:
**PCT/FR2013/052469**

(87) Numéro de publication internationale:
**WO 2014/060698 (24.04.2014 Gazette 2014/17)**

(54) **SYSTÈME ET PROCÉDÉ DE NAVIGATION D'UN VÉHICULE MOBILE ADAPTÉ POUR DÉTERMINER ET AFFICHER UNE ZONE DE SÉCURITÉ DE NAVIGATION**

NAVIGATIONSSYSTEM UND -VERFAHREN EINES BEWEGLICHEN FAHRZEUGS GEEIGNET ZUM BESTIMMEN UND ANZEIGEN EINER SICHERHEITS-NAVIGATIONSZONE

NAVIGATION SYSTEM AND METHOD OF A MOBILE VEHICLE ADAPTED TO DETERMINE AND TO DISPLAY A SECURITY NAVIGATION ZONE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.10.2012 FR 1259999**

(43) Date de publication de la demande:
**26.08.2015 Bulletin 2015/35**

(73) Titulaire: **Ixblue**
**78160 Marly Le Roi (FR)**

(72) Inventeur: **NAPOLITANO, Fabien**
**F-78750 Mareil Marly (FR)**

(74) Mandataire: **Jacobacci Coralis Harle**
**32, rue de l'Arcade**
**75008 Paris (FR)**

(56) Documents cités:
**US-A1- 2012 022 784**

• **PAWEL ZALEWSKI: "Models of DP systems in full mission ship simulator", SCIENTIFIC JOURNALS, MARITIME UNIVERSITY OF SZCZECIN, vol. 20, no. 92, 1 janvier 2010 (2010-01-01), pages 146-152, XP002712126, Szczecin ISSN: 1733-8670**

**Description**

La présente invention se rapporte aux systèmes de navigation d'un véhicule mobile, par exemple des bateaux et véhicules sous-marin, et plus précisément aux systèmes permettant d'améliorer la sécurité de navigation grâce à la détermination d'une zone de sécurité autour d'un bateau.

Il existe de nombreuses méthodes permettant de déterminer la position d'un bateau parmi lesquelles on peut citer :

- les méthodes de radionavigation (GPS, LORAN, Base-longue acoustique,...). Ces méthodes permettent de positionner le bateau par rapport à un réseau de référence à condition que la transmission des ondes entre le réseau et le bateau soit possible ;
- les méthodes de navigation à l'estime qui regroupent aussi les méthodes de navigation inertielle. Ces méthodes permettent de positionner le bateau à partir d'une position initiale en intégrant des mesures de vitesses ou d'accélération instantanée. Précise sur le court terme, la navigation à l'estime tend à devenir imprécise sur le long terme à cause de l'accumulation des erreurs intégrées des capteurs ; et
- les méthodes de navigation terrain. Ces méthodes consistent à utiliser des mesures de l'environnement réalisé par le bateau (altimétrie, gravimétrie, ...) et à en déduire la position du véhicule mobile par comparaison à une carte de référence.

Utilisées conjointement avec des moyens de cartographie électronique, par exemple un système de type ECDIS (Electronic Chart Display Information System), ces méthodes permettent de représenter la position estimée du bateau sur une carte géographique. Le US2012/022784 A1 divulgue un système de navigation inertiel qui utilise un capteur de terrain et un filtre Kalman.

Lors de la navigation dans des eaux présentant des obstacles à la navigation, et en particulier en petit fond, il n'est pas suffisant de disposer d'une estimation de position. Il faut également être capable de déterminer une zone de sécurité autour du bateau afin de tenir compte des erreurs potentielles des moyens de navigation. La disponibilité d'une information de zone de sécurité permet de lever des alertes lorsque la position du bateau risque de croiser une zone de navigation dangereuse, par exemple une isobathe déterminée en fonction de la hauteur d'eau minimale nécessaire à la navigation du bateau, la position du bateau et l'isobathe étant représentées sur la carte géographique.

Afin de permettre une extension maximale des zones accessibles tout en garantissant la sécurité du bateau il est important que la zone de sécurité soit déterminée précisément sans être ni sous-estimée ni surestimée dans son étendue.

Lorsque le bateau ou le sous-marin est équipé d'un sondeur permettant de déterminer la hauteur d'eau sous le bateau, ce qui est le cas général, il existe une méthode de navigation traditionnelle appelée flaque de navigation dans la terminologie française, *pool of error* dans la terminologie anglaise, qui permet de déterminer une telle zone.

La méthode de la flaque de navigation est une méthode réalisable graphiquement et sans calcul consistant à déterminer une zone de sécurité, autour de la position du bateau appelée flaque de navigation, à partir des informations de sonde et des isobathes de la carte puis à déplacer cette zone au cours du temps en tenant compte de la vitesse du bateau et de son incertitude due au courant par exemple. Cette méthode fournit à l'utilisateur une information facilement intelligible (la zone de sécurité) qui tient compte correctement de l'accumulation des incertitudes de vitesse et de la non-linéarité du problème. En particulier cette méthode permet de déterminer des zones de navigation de forme quelconque. Historiquement utilisée manuellement sur des calques elle est aujourd'hui implanté dans des systèmes de cartographie électronique de type ECDIS.

La méthode de la flaque de navigation repose sur l'hypothèse, fondamentalement fausse, que la probabilité de présence du bateau dans la flaque de navigation est uniforme. De plus son utilisation nécessite, pour ne pas mettre en danger le bateau, de surestimer fortement l'impact des erreurs de marées sur les points de sonde car elle n'est pas adaptée à une prise en compte fine de ces erreurs. Ces deux points, qui sont le revers de la simplicité de la méthode, conduisent en pratique à privilégier la robustesse au détriment de la précision de détermination de la zone de sécurité. Ainsi la méthode traditionnelle de la flaque de navigation conduit à surestimer largement la zone de sécurité ce qui limite fortement les capacités d'opération du bateau.

D'un autre côté, il existe depuis quelques années des méthodes mathématiques de filtrage non-linéaire permettant de calculer de façon précise la densité de probabilité de présence d'un véhicule mobile sur une carte, en comparant les mesures d'un instrument de type sondeur aux informations de bathymétrie contenues dans une base de données géographique. L'état de l'art de ces méthodes peut être trouvé par exemple dans les publications suivantes : Fredrik Gustafsson, Particle Filter Theory and Practice with Positioning Applications, 2010, IEEE Aerospace and Electronic Systems Magazine (25), 7, 53-81 et Niclas Bergman, Lennart Ljung and Frederik Gustafsson, « Terrain Navigation using Bayesian Statistics » IEEE Control Systems Magazine, 1999. Le document de brevet US2012/0022784_A1 décrit aussi un système de navigation par corrélation de terrain (TAN) comprenant un filtrage non-linéaire pour estimer la distribution de probabilité conditionnelle d'un ensemble de mesures.

Par construction, ces méthodes calculent de façon approchée la densité de probabilité de présence du véhicule mobile le long de la carte. Elles tendent du point de vue de l'estimation de la densité de probabilité de présence vers la solution optimale, sous réserve qu'une puissance de calcul suffisante soit disponible pour prendre en compte fidèlement les différents paramètres du modèle d'erreur. En pratique, l'utilisation de ces méthodes nécessite de réaliser plusieurs hypothèses simplificatrices, mais elles restent néanmoins largement supérieures aux méthodes de filtrage linéaire.

Etant donné que la densité de probabilité de présence est un indicateur extrêmement complexe et en particulier n'est pas un indicateur directement intelligible pour un opérateur humain, les méthodes de filtrage non-linéaires produisent des indicateurs standards plus simples. En particulier, les indicateurs standards utilisés correspondent aux statistiques d'ordre 1 et 2 de la distribution de probabilité calculée, c'est-à-dire la moyenne au sens des moindres carrés et la covariance correspondante (voir par exemple Gustaffson équation (7a) et (7b)).

Ces indicateurs sont facilement compréhensibles pour un opérateur d'autant plus qu'ils sont identiques dans leur principe aux indicateurs classiques issus des méthodes de filtrage linéaire utilisé dans la majorité des systèmes et auxquels les opérateurs sont donc habitués. Malheureusement ils sont très mal adaptés à la navigation dans des zones présentant des obstacles dangereux et leur utilisation peut conduire à des risques important pour la sécurité.

D'une part la moyenne au sens des moindres carrés qui correspond à la meilleure estimée disponible de la position n'est pas, même en général, un point où il existe une probabilité de présence non nulle. Par exemple, si on utilise conjointement la méthode de la flaque de navigation et une des méthodes modernes de filtrage non-linéaire on se trouvera fréquemment dans un cas où la position estimée issue du filtre non-linéaire n'est pas contenue dans la flaque de navigation : dans un tel cas le bateau ne peut pas se trouver à la position estimée par la moyenne au sens des moindres carrés. D'autre part la covariance d'erreur de position ne permet pas non plus de représenter fidèlement l'étendue de l'incertitude de navigation : sa représentation naturelle correspond à une ellipse, centrée sur la moyenne estimée par moindre carré dont on a vu qu'elle n'était pas pertinente, tandis que l'incertitude de navigation est en général une zone de forme beaucoup plus complexe (correspondant à la non-linéarité du problème) et donc très différente d'une ellipse.

Ainsi des deux types de méthodes disponibles aujourd'hui : la flaque de navigation classique, d'une part et les méthodes de filtrage non-linéaire modernes d'autre part, aucune ne permet de répondre de façon correcte au problème de sécurité de navigation dans des eaux présentant potentiellement des obstacles. La méthode de la flaque de navigation classique fournit, sous réserve d'être correctement mise en oeuvre, une estimation robuste et facilement utilisable de la zone de sécurité. Par contre elle est largement sous-optimale ce qui conduit à restreindre fortement le champ des opérations. De plus, la méthode de la flaque de navigation classique est une méthode graphique réalisée généralement sur des calques que l'on déplace manuellement par rapport à une carte du fond marin. Pour leur part, les méthodes modernes de filtrage non-linéaires sont capables d'estimer relativement précisément l'ensemble de la densité de probabilité de présence ce qui en théorie correspond à l'ensemble de l'information nécessaire pour assurer la navigation conjointement à la carte de la zone d'opération. Par contre ces méthodes ne proposent pas d'indicateurs directement intelligibles ou alors des indicateurs, issus des méthodes de filtrage linéaire tels que la moyenne au sens des moindres carrés et la covariance, dont l'utilisation compromet la sécurité de navigation.

L'utilisation simultanée de la méthode classique de la flaque de navigation et des méthodes modernes de filtrage non-linéaire ne permet pas davantage de résoudre la problématique de sécurité mais cumule les désavantages de chacune des méthodes, d'autant plus comme on l'a vu que ces deux méthodes peuvent donner des résultats contradictoires.

Il existe donc un besoin d'un système et d'une méthode de détermination d'une zone de sécurité pour la navigation qui tout en possédant la robustesse et la simplicité de présentation de la méthode de la flaque de navigation classique soit capable de déterminer de façon précise cette zone de sécurité et de prendre en compte la non-linéarité du problème de détermination de la position estimée.

La disponibilité d'un tel système et d'une telle méthode permettrait ainsi d'assurer la sécurité de la navigation sans pour autant restreindre de façon inutile le champ des opérations.

La présente invention a pour but de remédier à ces inconvénients et concerne un système de navigation d'un véhicule mobile adapté pour déterminer et afficher une zone de sécurité de navigation du véhicule mobile, le système de navigation comprenant un système de navigation à l'estime adapté pour produire une série de mesures de variation de position du véhicule mobile au cours du temps, un calculateur, une mémoire de stockage, un capteur embarqué sur le véhicule mobile pour acquérir une série de mesures d'un paramètre environnemental en fonction du temps ; un système de cartographie électronique comprenant un dispositif d'affichage et relié à une base de données géographiques de référence du paramètre environnemental, le système de cartographie électronique permettant de déterminer pour chaque point d'une carte géographique la valeur de référence du paramètre environnemental. Le calculateur est connecté à la mémoire de stockage, à la base de données géographiques, au système de navigation à l'estime et au système de cartographie électronique.

Selon l'invention, le calculateur est adapté pour calculer la densité de probabilité de présence du véhicule mobile autour de chaque point de la carte à chaque instant t, à partir de la série de mesures de variations de position du système de navigation à l'estime, de la série de mesures du paramètre environnemental, et de la base de données géographique de référence du paramètre environnemental, pour en déduire une zone de sécurité correspondant à une probabilité de présence supérieure ou égale à un seuil p prédéterminé et le système de cartographie électronique est adapté pour représenter ladite zone de sécurité sur le dispositif d'affichage.

L'invention permet ainsi de déterminer précisément et d'afficher à l'utilisateur une zone de sécurité correspondant à une probabilité de présence choisie.

Selon des caractéristiques avantageuses de modes de réalisation particuliers de l'invention :

- le calculateur est adapté pour calculer une matrice d'estimation de densité de probabilité de présence à deux dimensions représentant la densité de probabilité de présence du véhicule mobile, chaque point de la matrice d'estimation de densité de probabilité de présence correspondant à un point de la carte géographique défini par homothétie des coordonnées spatiales, chaque coefficient de la matrice d'estimation de densité de probabilité de présence correspondant à la probabilité de présence du véhicule mobile dans un carré autour de ce point, et la mémoire de stockage est adaptée pour enregistrer à chaque instant ladite matrice d'estimation de densité de probabilité de présence ;
- le calculateur est adapté pour calculer une matrice d'erreur, de mêmes dimensions et de même pas que la matrice d'estimation de densité de probabilité de présence, chaque coefficient de la matrice d'erreur correspondant à une estimation d'un ou de plusieurs paramètres auxiliaires d'erreur du système pour chaque point de la carte et dans lequel la mémoire de stockage est adaptée pour enregistrer à chaque instant ladite matrice d'erreur.

Avantageusement, le calculateur est adapté pour calculer récursivement la densité de probabilité de présence du véhicule mobile autour de chaque point de la carte à chaque instant t, suivant les étapes de traitement suivante :

- une étape d'initialisation de la densité de probabilité à partir d'une valeur d'incertitude de position initiale ;
- une étape de correction de la densité de probabilité réalisée à chaque acquisition d'une mesure du paramètre environnemental ;
- une étape de propagation de la densité de probabilité réalisée à chaque acquisition d'une mesure de variation de la position du véhicule mobile produite par le système de navigation à l'estime.

Suivant des modes de réalisation particuliers :

- l'étape de propagation comporte une étape de calcul d'incertitude de déplacement du véhicule mobile par combinaison de l'incertitude de vitesse et de l'incertitude de position du véhicule mobile et dans lequel l'étape de propagation comporte une étape de convolution de la densité de probabilité d'erreur de déplacement avec la densité de probabilité de présence ; et éventuellement,
- l'étape de propagation des coefficients de la matrice d'erreur comporte une étape de convolution de la densité de probabilité d'erreur de déplacement avec la matrice d'erreur.

Avantageusement, le calculateur est adapté pour utiliser une valeur de covariance commune à l'ensemble des points de la matrice d'erreur, ladite valeur de covariance étant apte à représenter l'incertitude du ou des paramètres auxiliaires en chaque point de la matrice d'erreur et dans lequel l'étape de correction est réalisée au moyen d'un processus de filtrage linéaire sur chacun des coefficients de la matrice d'erreur, ledit processus de filtrage linéaire ayant un gain commun à l'ensemble des coefficients.

Préférentiellement, le calculateur est adapté pour :

- trier l'ensemble des coefficients de la matrice d'estimation de densité de probabilité de présence du véhicule mobile,
- déterminer le plus petit sous-ensemble de coefficients dont la somme est supérieure à $p/\varepsilon^2$ où $\varepsilon$ est le pas de la grille géographique correspondant aux dimensions élémentaires des carrés de la matrice de densité de probabilité,
- réunir les zones élémentaires de la matrice autour de chacun des coefficients retenus,
- en déduire au moins une zone de sécurité correspondant à une probabilité de présence supérieure ou égale à un seuil de probabilité p.

Avantageusement, le système de navigation est adapté pour déterminer une pluralité de zones disjointes correspondant à une probabilité de présence supérieure ou égale à un seuil p, et le calculateur est adapté pour déterminer la plus petite zone convexe contenant les zones disjointes et former une zone de sécurité convexe.

De manière préférée, le véhicule mobile est un véhicule mobile marin ou sous-marin et le capteur embarqué comporte un sondeur de profondeur apte à déterminer la hauteur d'eau sous le véhicule mobile marin ou sous-marin jusqu'au fond de l'eau, ou un capteur de gravimétrie ou une sonde de courant marin.

De façon avantageuse, le système de navigation comporte en outre un dispositif de prédiction des valeurs de marée au cours du temps à la position estimée du véhicule mobile.

Selon des aspects particuliers du système de navigation :

- les coefficients de la matrice d'erreur correspondent à une estimation de l'erreur de marée ;
- les coefficients de la matrice d'erreur correspondent à une estimation de l'erreur de mesure du capteur environnemental.
- le calculateur est adapté pour calculer une pluralité de zones de sécurité (12) correspondant respectivement à différents seuils prédéterminés de probabilité de présence, et dans lequel le système de cartographie électronique (70) est adapté pour représenter ladite pluralité de zones de sécurité (12) sur le dispositif d'affichage.

L'invention concerne aussi un procédé de navigation d'un véhicule mobile, de préférence marin ou sous-marin, le procédé étant adapté pour déterminer et afficher une zone de sécurité de navigation du véhicule mobile, le procédé de navigation comprenant :

- l'acquisition et le stockage en mémoire d'une série de mesures de vitesse(s) et/ou d'accélération(s) instantanée(s) provenant d'un système de navigation à l'estime, en fonction du temps,
- l'acquisition et le stockage en mémoire d'une série de mesures d'un paramètre environnemental d'un capteur embarqué sur le véhicule mobile en fonction du temps ;
- le calcul à chaque instant t de la densité de probabilité de présence du véhicule mobile autour de chaque point de la carte, à partir de la série de mesures de variations de position du système de navigation à l'estime, de la série de mesures du paramètre environnemental et de la base de données géographique de référence du paramètre environnemental,
- la détermination d'une zone de sécurité correspondant à une probabilité de présence supérieure ou égale à un seuil $p$ prédéterminé, et
- la représentation sur un dispositif d'affichage d'une carte géographique de référence du paramètre environnemental de ladite zone de sécurité.

L'invention se rapporte ainsi à une méthode de navigation qui combine une navigation à l'estime (par ex. navigation inertielle) et une navigation terrain, pour en déduire une position estimée et une zone de sécurité autour de cette position estimée. Elle est particulièrement utile lorsqu'aucune radionavigation n'est possible.

L'invention trouvera une application particulièrement avantageuse dans la navigation de bateaux et de véhicules sous-marins indépendamment d'un système de radionavigation.

La présente invention concerne également les caractéristiques qui ressortiront au cours de la description qui va suivre et qui devront être considérées isolément ou selon toutes leurs combinaisons techniquement possibles.

Dans la suite du présent document, le terme mobile ou véhicule mobile désigne de préférence un bateau ou un véhicule sous-marin.

On définit la position estimée du véhicule mobile comme étant la position géographique du barycentre de l'ensemble des positions possibles sur la carte, pondérées par la probabilité de présence autour de chaque position.

Dans la suite de la description, le terme « zone de sécurité» est équivalent au terme « flaque de navigation statistique » et représente l'ensemble des positions géographiques pour lesquelles la probabilité de présence du véhicule mobile est supérieure à un seuil $p$ fixé par l'utilisateur et mis en mémoire dans le système de navigation.

Cette description donnée à titre d'exemple non limitatif fera mieux comprendre comment l'invention peut être réalisée en référence aux dessins annexés sur lesquels :

- la figure 1 représente schématiquement les différents composants d'un système de navigation selon un exemple de mise en oeuvre ;
- la figure 2 représente schématiquement les principale étapes du procédé de l'invention allant du calcul jusqu'à l'affichage de la flaque de navigation statistique sur le système de cartographie électronique ;
- la figure 3 représente un exemple de carte bathymétrique indiquant les courbes isobathes d'un fond marin en zone côtière et sur laquelle on a représenté la position estimée d'un bateau et une zone de sécurité calculée selon un mode de réalisation préféré du procédé de l'invention d'après une matrice d'estimation de densité de probabilité de présence à 99% ;
- la figure 4 représente la même carte bathymétrique que la figure 3 sur laquelle on a représenté la simulation d'une zone de sécurité calculée selon l'invention et d'une zone de forme elliptique autour de la position estimée calculée par la méthode des moindres carrés.

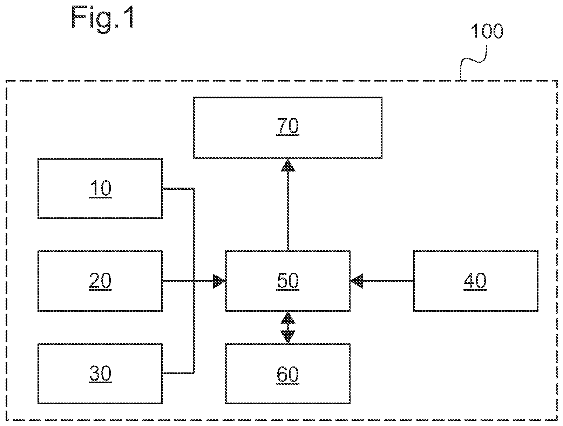

La figure 1 représente schématiquement un système de navigation 100 selon un mode de réalisation de l'invention comprenant :

- un système de navigation à l'estime 10 permettant de déterminer au cours du temps la variation de position du véhicule par intégration des mesures de vitesse et/ou d'accélération instantanées en fonction du temps ;
- un capteur embarqué 20 permettant de mesurer au moins un paramètre environnemental à chaque position du véhicule mobile en fonction du temps ;
- une base de données géographiques de référence 40 permettant de déterminer *a priori* pour chaque point de la carte la valeur du paramètre environnemental considéré, correspondant à ce point de la carte ;
- un calculateur 50 et une mémoire de stockage 60 ;
- un dispositif d'affichage de type dispositif de cartographie électronique 70.

De façon avantageuse, le système de navigation 100 comporte un dispositif manuel ou automatique de prédiction des valeurs de marée 30 au cours du temps au point de l'espace où se trouve le véhicule mobile.

Dans le cas où le véhicule mobile est un véhicule sous-marin, le capteur embarqué 20 comprend avantageusement un dispositif de mesure de la profondeur d'immersion du véhicule au dessous du niveau de la mer.

Le calculateur 50 est connecté à la mémoire de stockage 60, à la base de données géographiques 40, au dispositif de cartographie électronique 70, au système de navigation à l'estime 10, au capteur embarqué 20 et éventuellement au dispositif de prédiction des valeurs de marée 30.

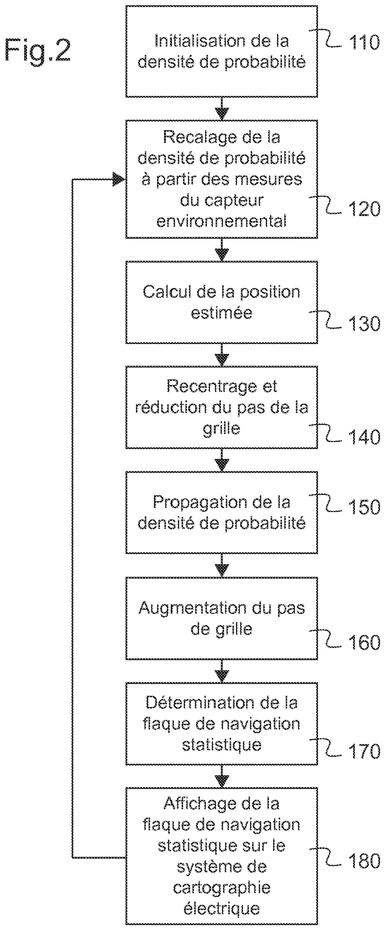

La figure 2 représente schématiquement les principales étapes du procédé de l'invention mis en oeuvre par le système de navigation 100.

Le calculateur 50 reçoit au cours du temps, à chaque mise à jour par acquisition de nouvelles mesures, les informations de variation de position fournies par le système de navigation à l'estime 10 et les informations environnementales du capteur embarqué 20. La mémoire de stockage 60 contient à chaque instant une représentation de la densité de probabilité de présence du véhicule mobile aux différents points de la carte. Cette densité de probabilité est initialisée de façon approximative à l'étape 110 à partir des mesures du système de navigation à l'estime 10 ou manuellement par l'utilisateur. Le calculateur 50 entretient par un calcul récursif une estimation de la densité de probabilité de présence du véhicule mobile à partir des informations des différents systèmes connectés (navigation à l'estime 10, capteur environnemental 20, base de données géographiques 40) et en déduit une zone de sécurité correspondant à la zone la plus probable dans laquelle se trouve le véhicule mobile avec une probabilité donnée. Cette zone de sécurité est ensuite transmise au système de cartographie électronique pour être représentée ce qui permet au navigateur de contrôler la navigation de façon optimale vis-à-vis des contraintes de sécurité choisies.

Le système de navigation 100 permet ainsi de déterminer et d'afficher une flaque de navigation statistique 11.

Selon un mode de réalisation préféré, la représentation de la densité de probabilité de présence du véhicule mobile est stockée sous forme d'une matrice d'estimation de densité de probabilité de présence, ou matrice PDF, à deux dimensions. Par exemple on considère une matrice PDF de taille 2N+1 x 2N+1 où N représente un nombre entier, N est par exemple égal à 200. Le centre de la matrice PDF, c'est-à-dire le point de coordonnées (N, N) en numérotant les coordonnées depuis zéro, correspond à la position géographique estimée du véhicule mobile. Chaque point de la matrice PDF correspond à un point de la carte obtenu par homothétie des coordonnées en supposant que la distance entre deux points le long d'une même ligne ou d'une même colonne est égale à une valeur $\varepsilon$ appelée pas de la grille. La valeur $\varepsilon$ est déterminée au cours du calcul. Typiquement $\varepsilon$ est compris entre 0,1 mètre et 10 mètres. Chaque point de la matrice PDF correspond à la probabilité de présence du véhicule dans un carré autour de ce point dont les dimensions sont égales au pas de la grille.

D'autre part la mémoire de stockage 60 peut être utilisée avantageusement pour stocker dans une autre matrice dite matrice d'erreur ou matrice EP, de mêmes dimensions et de même pas que la matrice d'estimation de densité de probabilité de présence, une estimation des paramètres auxiliaires d'erreur du système 100 pour chaque point de la carte. Par exemple, on peut utiliser avantageusement cette seconde matrice EP pour stocker en chaque point une estimation de l'erreur de marée, par rapport à la prédiction, correspondant au cas où le véhicule mobile se trouverait en ce point.

Afin de simplifier l'exposé qui suit, on se place dans le cas où le capteur environnemental 20 est un sondeur c'est-à-dire un instrument permettant de déterminer la hauteur d'eau sous le véhicule mobile jusqu'au fond de la mer. Dans ce cas, on suppose que la base de données géographique 40 contient en chaque point de la carte la valeur attendue de hauteur d'eau pour une valeur de marée donnée. Comme on pourra le voir facilement, les mêmes étapes sont applicables *mutatis mutandis* à d'autres capteurs environnementaux, tels par exemple qu'un gravimètre permettant de mesurer le champ de gravité à la position du véhicule mobile.

Selon un mode de réalisation préféré du procédé de navigation de l'invention illustré sur la figure 2, les étapes de calculs sont les suivantes :

- Initialisation de la densité de probabilité 110 ;
- Mise à jour de la densité de probabilité à partir des mesures du sondeur 120 ;
- Calcul de la position estimée à partir de la densité de probabilité de présence 130 ;
- Recentrage de la grille sur la position estimée et réduction du pas de la grille si possible 140 ;
- Propagation de la densité de probabilité à partir des mesures de la navigation à l'estime 150 ;
- Augmentation du pas de grille si nécessaire 160 ;
- Détermination de la flaque de navigation statistique 170 ;
- Affichage de la flaque de navigation statistique sur le dispositif de cartographie électronique 180.

L'étape 110 d'initialisation de la densité de probabilité n'est faite qu'une fois au démarrage du système. Cette étape 110 d'initialisation consiste à utiliser des indicateurs de qualité disponibles par ailleurs, par exemple la covariance d'erreur fournie par le système de navigation à l'estime 10, ou une information de covariance d'erreur fournie par l'utilisateur. Etant donnée une covariance d'erreur de position $\sigma^2(X)$ et la dimension 2N+1 de la matrice de densité de probabilité, on commence par définir un pas de grille tel que le support à 3 sigmas de la densité de probabilité de covariance $\sigma^2(X)$ occupe exactement un carré de taille $(2N+1)\varepsilon$. On initialise ensuite la densité de probabilité avec la formule suivante :

$$PDF(a,b) \leftarrow \frac{1}{\sqrt{2\pi |\det \sigma^2(X)|}} \exp\left(-\frac{\varepsilon^2}{2}(a-N \quad b-N)\left(\sigma^2(X)\right)^{-1}\begin{pmatrix} a-N \\ b-N \end{pmatrix}\right)$$

où $(a,b)$ sont les coordonnées le long de la matrice PDF ; $(N,N)$ sont les coordonnées du centre de la matrice et $\varepsilon$ est le pas de la grille dans le repère géographique dont les points correspondent aux coefficients de la matrice PDF.

A chaque mesure d'un point de sonde, on met à jour la densité de probabilité PDF en déterminant la vraisemblance de la sonde mesurée pour chaque point de la carte correspondant à un point de la matrice PDF. Pour cela on commence par déterminer la hauteur d'eau attendue en chaque point de coordonnées (a, b) dont on retire la hauteur d'eau prédite en ce point d'après la base de données géographique et éventuellement l'estimation d'erreur de marée en ce point :

$$\delta h(a,b) = h_{mesurée} + p_{mesurée} - h_{\text{base de données}}\left(x_{centre} + (a-N)\varepsilon, y_{centre} + (b-N)\varepsilon\right) - EP(a,b)$$

où $\delta h(a,b)$ est l'erreur de sonde mesuré correspondant au point de coordonnées $(a,b)$ de la matrice PDF, $h_{mesurée}$ est l'altitude mesurée par rapport au fond au moyen du sondeur, $p_{mesurée}$ est la profondeur d'immersion du véhicule mobile mesurée au moyen d'un capteur de pression, $(x_{centre}, y_{centre})$ les coordonnées géographiques du point correspondant dans le repère géographique au centre de la matrice PDF, $h_{\text{base de données}}(\alpha,\beta)$ l'altitude prédite d'après la base de donnée géographique au point de coordonnées géographiques $(\alpha,\beta)$.

On suppose ici que la matrice EP contient uniquement une estimation de l'erreur de marée en chaque point. Dans le cas où la matrice EP contient en chaque point l'estimation de plusieurs paramètres, on sélectionne ici celui correspondant à la marée.

On met ensuite à jour la matrice PDF suivant les formules classiques de vraisemblance :

$$PDF(a,b) \leftarrow \frac{1}{\sqrt{2\pi |\sigma^2(h) + \sigma^2(m)|}} \exp\left(-\frac{1}{2}\frac{(\delta h(a,b))^2}{\sigma^2(h) + \sigma^2(m)}\right) \times PDF(a,b)$$

où $\sigma^2(h)$ est la covariance de mesure de sonde et $\sigma^2(m)$ la covariance d'estimation d'erreur de marée (cette covariance est identique pour tous les points de la matrice EP).

Etant donnée que l'intégrale de la densité de probabilité doit être égale à un, on normalise la matrice PDF en multipliant ses coefficients par le facteur adéquat.

On met ensuite à jour la matrice EP en utilisant les formules classiques de filtrage linéaire:

$$EP(a,b) \leftarrow EP(a,b) + \frac{\sigma^2(m)}{\sigma^2(h) + \sigma^2(m)} \delta h(a,b)$$

De même on met à jour la covariance $\sigma^2(m)$ par :

$$\sigma^2(m) \leftarrow \frac{\sigma^2(m)\sigma^2(h)}{\sigma^2(h) + \sigma^2(m)}$$

Ces formules de mise à jour de la matrice EP et de la covariance $\sigma^2(m)$ sont les formules classiques dites « de filtrage de Kalman » et elles sont donc facilement généralisables au cas où plusieurs paramètres d'erreurs doivent être pris en compte. La valeur de covariance d'erreur $\sigma^2(m)$ est commune à l'ensemble des coefficients de la matrice EP et

le même gain $\dfrac{\sigma^2(m)}{\sigma^2(h) + \sigma^2(m)}$ est utilisé pour tous les coefficients. Il est donc possible de généraliser l'utilisation de la matrice EP au cas où il est nécessaire d'estimer conjointement plusieurs paramètres d'erreur auxiliaires sans que cela conduise pour autant à une quantité de calcul trop importante.

Une fois une mesure de sonde réalisée, il est en général intéressant de recentrer la grille et si possible de réduire son pas afin d'obtenir pour une taille de matrice PDF donnée la grille de plus petit pas possible ce qui permet d'estimer plus finement la densité de probabilité de présence et donc la flaque de navigation statistique. Une façon très avantageuse de réaliser cette réduction consiste à calculer l'empreinte de la flaque de navigation statistique correspondant à une probabilité de présence fixée proche de 1, par exemple 99%. Le calcul de cette flaque de navigation statistique à partir de la matrice PDF sera décrit plus loin et on suppose pour le moment qu'il est acquis. L'empreinte de la flaque de navigation statistique est ici l'ensemble des points de la matrice PDF ayant permis de calculer la flaque de navigation statistique. Une fois calculée l'empreinte de la flaque de navigation statistique à la probabilité choisie, on détermine le nouveau centre de grille et le pas optimal de telle façon que la flaque de navigation statistique soit exactement contenue dans la nouvelle grille. Puis on calcule les coefficients de la nouvelle matrice PDF par interpolation des coefficients de l'ancienne matrice PDF tel que par exemple décrit dans la référence Bergman.

A chaque réception d'une estimation de variation de position fournie par le système de navigation à l'estime on met à jour la position du centre de la grille sur la carte en appliquant la même variation et on met à jour la matrice PDF en la convoluant avec la densité de probabilité d'erreur de variation de position. De la même façon on convolue la matrice EP avec cette même densité de probabilité d'erreur de variation de position.

L'introduction de la matrice EP et les calculs afférents sont nouveaux par rapport à l'état de l'art et permettent de mieux prendre en compte les différents paramètres d'erreur et en particulier les erreurs de mesures du capteur environnemental (que ces erreurs soient dues à des phénomènes extérieurs comme la marée ou simplement à l'erreur de biais du capteur)

En général les erreurs de variations de position d'un instant à l'autre ne sont pas indépendantes car elles sont déterminées en grande partie par des phénomènes ayant des variations lentes dans le temps (par exemple le courant). Pour prendre en compte ce type d'erreur, les méthodes de filtrage telle que présentées plus haut proposent d'ajouter dans le modèle d'erreur les paramètres d'erreur de vitesse. Malheureusement l'augmentation de la dimension du problème qui en résulte conduit a une explosion combinatoire des calculs et donc en pratique à l'impossibilité d'utiliser en temps réel une telle méthode. Afin de tenir compte de la corrélation des erreurs de vitesse au cours du temps, il est avantageux de modifier les formules classiques de détermination de la covariance d'erreur de variation de position en déterminant cette covariance non seulement à partir de la covariance d'erreur de vitesse instantanée mais aussi à partir de la covariance d'erreur de position estimée à partir de la densité de probabilité de présence. Par exemple si on considère des erreurs circulaires de vitesse de covariance scalaire à variation lente $\sigma^2(v_{LOG})$ et de covariance aléatoire $\sigma^2(\omega)$ on peut utiliser une formule du type suivant :

$$\sigma^2(\Delta X) \leftarrow 2\sqrt{\sigma^2(v_{LOG})}\left(\sqrt{\sigma^2(X)}\right)\Delta t + (\Delta t)^2 \begin{bmatrix} \sigma^2(v_{LOG}) & 0 \\ 0 & \sigma^2(v_{LOG}) \end{bmatrix} + \Delta t \cdot \sigma^2(\omega)$$

où $\sigma^2(\Delta X)$ est la covariance d'erreur de position accumulée, $\sqrt{\sigma^2(X)}$ est la racine carrée de la covariance d'erreur de position estimée et $\Delta t$ est l'intervalle de temps entre deux mises à jour. Ce type de formule permet, sans surcharger le calcul, de mieux tenir compte de l'accumulation des erreurs de vitesse corrélées temporellement et donc évite de sous-estimer au final la flaque de navigation statistique.

Ainsi, le calcul de l'incertitude de déplacement du véhicule mobile par combinaison de l'incertitude de vitesse et de l'incertitude de position du véhicule mobile permet une meilleure prise en compte de l'accumulation des erreurs de vitesse.

Dans le cas où les paramètres estimés par la matrice EP sont susceptibles d'évoluer au cours du temps, on met à jour la matrice de covariance de ces paramètres (commune à l'ensemble des points de la grille sur laquelle on estime la densité de probabilité de présence) en utilisant les méthodologies classiques de filtrage linéaire. Par exemple, on modélise l'évolution des paramètres de la matrice EP suivant un processus de Markov d'ordre 1 et on met à jour suivant les formules correspondantes la covariance et la valeur des coefficients de la matrice EP.

Une fois propagée la densité de probabilité d'erreur de position il peut être nécessaire d'augmenter le pas de la grille afin de s'assurer que la matrice PDF permet de représenter l'ensemble de la densité de probabilité. De même que pour la réduction du pas de grille on commence par calculer la flaque de navigation statistique correspondant à une probabilité de présence fixée proche de 1. Si un des points de cette flaque de navigation statistique est suffisamment proche des bords de la matrice grille dans le repère géographique correspondant à la matrice PDF, on choisit d'augmenter le pas de grille d'un facteur préalablement défini.

Une fois ces différentes étapes réalisées la mémoire de stockage contient une représentation de la densité de probabilité de présence du bateau autour de chaque point de la carte. On détermine alors la flaque de navigation statistique pour la probabilité $p$ correspondant au paramètre de sécurité défini par l'utilisateur. Une méthode efficace permettant de déterminer cette flaque consiste à trier l'ensemble des coefficients de la matrice PDF puis à déterminer le plus petit sous-ensemble de coefficients dont la somme est supérieure à $p/\varepsilon^2$. La flaque de navigation statistique est alors la réunion des zones élémentaires de la grille autour des coordonnées de chacun des points de la grille correspondant à un coefficient retenu. Par exemple on définit une zone élémentaire comme le carré de coté $\varepsilon$ centré sur chaque point. Etant donné que la matrice PDF est en correspondance avec la carte géographique, la flaque de navigation statistique est également en correspondance avec la carte géographique et peut donc être transmise au système de cartographie électronique pour être représentée à l'utilisateur.

On peut noter qu'en général la flaque de navigation statistique n'est pas convexe ni même connexe. La flaque de navigation statistique contient toujours la position la plus vraisemblable. Par contre, la position estimée par la méthode du barycentre peut être en dehors de la flaque de navigation statistique. Si l'utilisateur souhaite simplifier l'affichage et accepte le compromis de performance correspondant on pourra réunir les différentes composantes connexes et éventuellement remplacer la flaque de navigation statistique par la plus petite zone convexe la contenant.

Le système et le procédé de l'invention permettent donc de déterminer et d'afficher pour le navigateur une zone de sécurité correspondant précisément à la zone dans laquelle se trouve le bateau avec une probabilité de présence donnée.

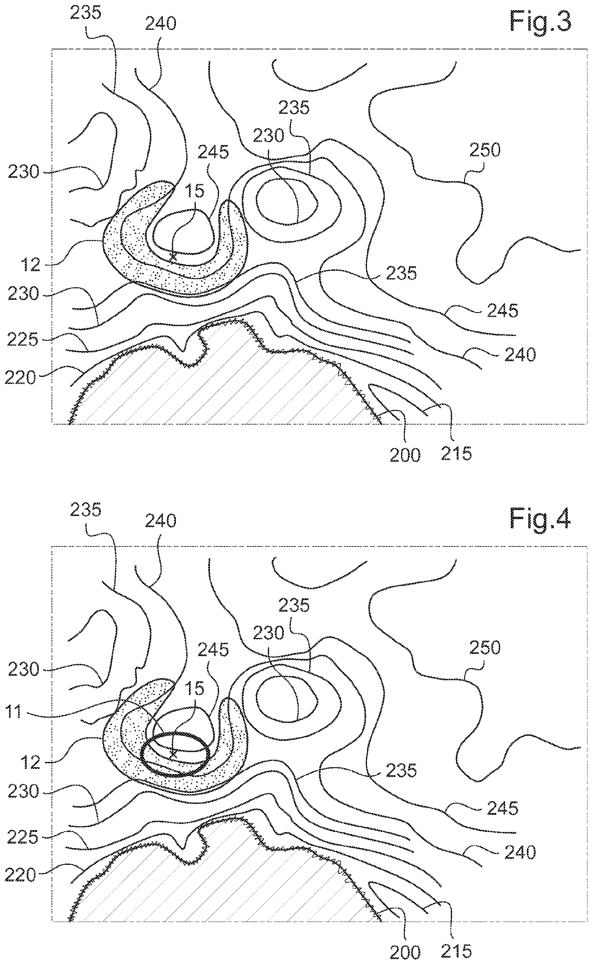

La figure 3 représente un exemple de carte géographique, plus précisément de carte bathymétrique indiquant les courbes isobathes (215, 220, 225, 230, 235, 240, 245, 250) d'un fond marin en zone côtière. La zone hachurée correspond à une zone côtière, et la ligne (200) à une courbe d'isobathe de profondeur nulle. La courbe isobathe (215) correspond à une profondeur de 15m, la courbe isobathe (220) correspond à une profondeur de 20m,... et la courbe isobathe (250) correspond à une profondeur de 50m. On a représenté sur la figure 3 la position estimée et la simulation de zones de sécurité (flaque de navigation statistique 12) calculée selon un mode de réalisation préféré du procédé de l'invention d'après une matrice d'estimation de densité de probabilité de présence autour de la position estimée.

On représente sur la Fig. 3 une zone de probabilité de présence (12) calculée d'après la matrice de densité de probabilité de présence à 99%. Dans ce cas, la flaque de navigation à 99% a une forme de « haricot » sur la carte bathymétrique. On peut noter que la position estimée (15) par la méthode des moindres carrés (méthode classique) est en dehors de la flaque de navigation statistique (12). De fait, le bateau ne peut pas se trouver à cette position estimée (15). D'après la position estimée (15), le bateau se trouverait proche de la courbe bathymétrique (245) correspondant à un fond à 45m, alors qu'il est possible d'après la flaque de navigation statistique (12) que le bateau soit sur la courbe bathymétrique (235) correspondant à un fond à 35 m, qui peut représenter un danger plus important pour la navigation. L'affichage de la flaque de navigation statistique (12) remplace très avantageusement l'affichage de la position estimée (15) qui n'est donc plus nécessaire.

La figure 4 représente la même carte géographique que la figure 3 avec les mêmes courbes isobathes (215, 220, 225, 230, 235, 240, 245, 250). On a représenté sur la figure 4, la simulation d'une zone de sécurité (11) calculée d'après une estimation de position et de covariance d'erreur autour d'une position estimée (15) par la moyenne au sens des moindres carrés (méthode classique). La figure 4 permet de comparer la zone de sécurité (12) déterminée à 99% suivant la méthode de la flaque statistique et une zone de sécurité (11) calculée par la méthode des moindres carrés à 1 sigma. La zone de sécurité (11) calculée par la méthode des moindres carrés à 1 sigma a une forme géométrique en ellipse. On note que l'ellipse à 3 sigmas serait trois fois plus grosse que la zone de sécurité (11) représentée sur la figure 4.

Sur la figure 4, on observe que la méthode classique ne permet de représenter que des ellipsoïdes (11), ce qui a pour effet de surestimer la dimension des zones de sécurité. Au contraire, sur la figure 4, on observe que le dispositif permet de représenter plus précisément la zone de probabilité de présence du véhicule mobile (12).

Au contraire de la flaque de navigation classique, le système ne conduit pas à surestimer ou à sous-estimer la zone de navigation correspondant à une probabilité de présence donnée. En particulier d'une part la détermination de la flaque de navigation statistique repose sur une détermination précise de la densité de probabilité de présence et d'autre part sa détermination tient compte correctement de l'impact des erreurs auxiliaires comme par exemple l'erreur de marée.

Par ailleurs au contraire des zones de navigation qui peuvent être déterminées à partir des indicateurs de covariance issus des méthodologies de filtrage y compris non-linéaires proposées dans la littérature, la flaque de navigation statistique n'est pas contrainte à une forme ellipsoïde qui conduit à sous-estimer ou à surestimer la zone dans laquelle se trouve le bateau avec une probabilité de présence donnée.

Dans les zones présentant un risque pour la navigation et en particulier par petit fond ou en présence d'obstacles immergés, le système et le procédé remplacent donc très avantageusement les méthodes classiques consistant à déterminer une estimation de position et une covariance associée. Une fois l'entrainement de l'équipage à cette méthode de navigation par zone réalisé, le système et le procédé permettent à la fois d'améliorer la sécurité de navigation mais aussi d'étendre le spectre des opérations possibles.

L'ensemble du processus conduisant à la mise à disposition sur la carte électronique de la flaque de navigation statistique est entièrement automatique et ne requiert pas d'action du navigateur qui peut se concentrer sur la sécurité de navigation.

De même le système peut être associé à des dispositifs d'alarmes automatiques permettant de déclencher des alarmes pour le navigateur lorsque la flaque de navigation statistique entre en intersection avec une zone considérée comme une zone de danger.

Bien que dans la description le système ne détermine qu'une unique flaque de navigation statistique pour une probabilité de présence donnée, il est évident que plusieurs flaques de navigation statistiques correspondant à des probabilités de présence différentes peuvent être déterminées et affichées simultanément sans que cela change en rien le fond de la méthode. Par exemple il est possible d'afficher simultanément une flaque de navigation (12) correspondant à 99% de probabilité et une autre flaque de navigation statistique correspondant à 50% de probabilité, d'étendue plus restreinte que la flaque de navigation à 99%. La disponibilité de plusieurs flaques de navigation avec des probabilités de présence différentes, correspondant donc à des risques de navigation plus ou moins importants, permet au navigateur de prendre des décisions éclairées lorsque la sécurité de navigation rentre en conflit avec d'autres impératifs de sécurité tels que par exemple la nécessité de s'éloigner rapidement d'une zone donnée.

Dans la présente description et par souci de simplifier l'exposé, nous avons considéré le cas où le capteur environnemental (30) est un sondeur. D'autres capteurs peuvent être considérés sans que cela change en rien le principe général du système et du procédé. Par exemple, le sondeur peut être remplacé par un gravimètre et dans ce cas la base de données géographique contient en chaque point de la carte la valeur attendue de champ de gravité. Dans un autre exemple, le sondeur peut être remplacé par un capteur de courant et dans ce cas la base de données géographique contient en chaque point de la carte la valeur attendue de courant à un instant donné. L'utilisation d'autres capteurs environnementaux se déduit de même par simple transposition.

Plusieurs capteurs environnementaux peuvent être utilisés conjointement pour participer à l'estimation de la flaque de navigation statistique. Dans ce cas il est avantageux de calculer une seule matrice PDF commune aux différents capteurs et il suffit pour adapter la méthode de réaliser l'étape de mise à jour de la densité de probabilité pour chacun des capteurs plutôt que pour un unique capteur.

Dans l'exemple détaillé ci-dessus, la matrice EP ne contient l'estimation que d'un seul paramètre auxiliaire : la valeur de marée. D'autres paramètres peuvent être ajoutés en fonction des impératifs de précision attendue et du ou des capteurs environnementaux utilisés. Par exemple la matrice EP peut contenir une estimation des erreurs systématiques du sondeur ou du gravimètre, une estimation de la célérité du son dans l'eau etc. Plus généralement la matrice EP peut contenir une estimation de chacun des paramètres affectant la mesure du ou des capteurs environnementaux.

Bien que la description du système et de la méthode concerne l'utilisation pour la navigation des bateaux et des véhicules sous-marins, le système et la méthode sont applicables également au cas des véhicules terrestres ou aériens. Dans le cas de tels véhicules il est intéressant d'utiliser, en suivant la même méthode, d'autres types de capteurs environnementaux comme par exemple des capteurs RADAR ou LIDAR.

**Revendications**

1. Système de navigation d'un véhicule mobile adapté pour déterminer et afficher une zone de sécurité de navigation du véhicule mobile, le système de navigation comprenant :

   - un système de navigation à l'estime (10) adapté pour produire une série de mesures de variation de position du véhicule mobile au cours du temps,
   - un calculateur (50),
   - une mémoire de stockage (60),
   - un capteur embarqué (20) sur le véhicule mobile adapté pour acquérir une série de mesures d'un paramètre environnemental en fonction du temps ;
   - un système de cartographie électronique (70) comprenant un dispositif d'affichage et relié à une base de données géographiques (40) de référence du paramètre environnemental, le système de cartographie électronique permettant de déterminer pour chaque point d'une carte géographique la valeur de référence du paramètre environnemental,
   - le calculateur (50) étant connecté à la mémoire de stockage (60), à la base de données géographiques (40), au système de navigation à l'estime (10) et au système de cartographie électronique (70),

   **caractérisé en ce que** :

   - le calculateur (50) est adapté pour calculer la densité de probabilité de présence du véhicule mobile autour de chaque point de la carte à chaque instant t, à partir de la série de mesures de variations de position du système de navigation à l'estime, de la série de mesures du paramètre environnemental, et de la base de données géographique de référence du paramètre environnemental, pour en déduire une zone de sécurité (12) correspondant à une probabilité de présence supérieure ou égale à un seuil p prédéterminé,
   - le système de cartographie électronique (70) étant adapté pour représenter ladite zone de sécurité (12) sur le dispositif d'affichage.

2. Système de navigation selon la revendication 1 dans lequel le calculateur (50) est adapté pour calculer une matrice d'estimation de densité de probabilité de présence à deux dimensions représentant la densité de probabilité de présence du véhicule mobile, chaque point de la matrice d'estimation de densité de probabilité de présence correspondant à un point de la carte géographique défini par homothétie des coordonnées spatiales, chaque coefficient de la matrice d'estimation de densité de probabilité de présence correspondant à la probabilité de présence du véhicule mobile dans un carré autour de ce point, et dans lequel la mémoire de stockage (60) est adaptée pour enregistrer à chaque instant ladite matrice d'estimation de densité de probabilité de présence.

3. Système de navigation selon la revendication 2 dans lequel le calculateur (50) est adapté pour calculer une matrice d'erreur, de mêmes dimensions et de même pas que la matrice d'estimation de densité de probabilité de présence, chaque coefficient de la matrice d'erreur correspondant une estimation d'un ou de plusieurs paramètres auxiliaires d'erreur du système pour chaque point de la carte et dans lequel la mémoire de stockage (60) est adaptée pour enregistrer à chaque instant ladite matrice d'erreur.

4. Système de navigation selon l'une des revendications 1 à 3 dans lequel le calculateur (50) est adapté pour calculer récursivement la densité de probabilité de présence du véhicule mobile autour de chaque point de la carte à chaque instant t, suivant les étapes de traitement suivante :

   - une étape d'initialisation de la densité de probabilité (110) à partir d'une valeur d'incertitude de position initiale ;
   - une étape de correction de la densité de probabilité (120) réalisée à chaque acquisition d'une mesure du paramètre environnemental ;
   - une étape de propagation de la densité de probabilité (150) réalisée à chaque acquisition d'une mesure de variation de la position du véhicule mobile produite par le système de navigation à l'estime (10).

5. Système suivant les revendications 3 et 4 dans lequel l'étape de propagation (150) comporte une étape de calcul d'incertitude de déplacement du véhicule mobile par combinaison de l'incertitude de vitesse et de l'incertitude de position du véhicule mobile et dans lequel l'étape de propagation comporte une étape de convolution de la densité de probabilité d'erreur de déplacement avec la densité de probabilité de présence.

6. Système suivant la revendication 3 et l'une des revendications 4 ou 5 dans lequel l'étape de propagation des coefficients de la matrice d'erreur comporte une étape de convolution de la densité de probabilité d'erreur de déplacement avec la matrice d'erreur.

7. Système suivant la revendication 3 et l'une des revendications 4 à 6 dans lequel le calculateur est adapté pour utiliser une valeur de covariance commune à l'ensemble des points de la matrice d'erreur, ladite valeur de covariance étant apte à représenter l'incertitude du ou des paramètres auxiliaires en chaque point de la matrice d'erreur et dans lequel l'étape de correction est réalisée au moyen d'un processus de filtrage linéaire sur chacun des coefficients de la matrice d'erreur, ledit processus de filtrage linéaire ayant un gain commun à l'ensemble des coefficients.

8. Système de navigation selon l'une des revendications 2 à 7 dans lequel le calculateur (50) est adapté pour :

   - trier l'ensemble des coefficients de la matrice d'estimation de densité de probabilité de présence du véhicule mobile,
   - déterminer le plus petit sous-ensemble de coefficients dont la somme est supérieure à $p/\varepsilon^2$ où $\varepsilon$ est le pas de la grille géographique correspondant aux dimensions élémentaires des carrés de la matrice de densité de probabilité,
   - réunir les zones élémentaires de la matrice autour de chacun des coefficients retenus,
   - en déduire au moins une zone de sécurité (12) correspondant à une probabilité de présence supérieure ou égale à un seuil de probabilité $p$.

9. Système de navigation selon l'une des revendications 1 à 8 dans lequel étant déterminées une pluralité de zones disjointes correspondant à une probabilité de présence supérieure ou égale à un seuil $p$, le calculateur (50) est adapté pour déterminer la plus petite zone convexe contenant les zones disjointes et former une zone de sécurité convexe.

10. Système de navigation selon l'une des revendications 1 à 9 dans lequel le véhicule mobile est un véhicule mobile marin ou sous-marin et le capteur embarqué (20) comporte un sondeur de profondeur apte à déterminer la hauteur d'eau sous le véhicule mobile marin ou sous-marin jusqu'au fond de l'eau, ou un capteur de gravimétrie ou une sonde de courant marin.

11. Système de navigation selon l'une des revendications 1 à 10 comportant en outre un dispositif de prédiction des valeurs de marée (30) au cours du temps à la position estimée du véhicule mobile.

12. Système de navigation selon les revendications 3 et 11 dans lequel les coefficients de la matrice d'erreur correspondent à une estimation de l'erreur de marée.

13. Système de navigation selon la revendication 3 dans lequel les coefficients de la matrice d'erreur correspondent à une estimation de l'erreur de mesure du capteur environnemental.

14. Système de navigation selon l'une des revendications 1 à 13, dans lequel le calculateur (50) est adapté pour calculer une pluralité de zones de sécurité (12) correspondant respectivement à différents seuils prédéterminés de probabilité de présence, et dans lequel le système de cartographie électronique (70) est adapté pour représenter ladite pluralité de zones de sécurité (12) sur le dispositif d'affichage.

15. Procédé de navigation d'un véhicule mobile, de préférence marin ou sous-marin, le procédé étant adapté pour déterminer et afficher une zone de sécurité (12) de navigation du véhicule mobile, le procédé de navigation comprenant :

   - l'acquisition et le stockage en mémoire d'une série de mesures de vitesse(s) et/ou d'accélération(s) instantanée(s) provenant d'un système de navigation à l'estime, en fonction du temps,
   - l'acquisition et le stockage en mémoire d'une série de mesures d'un paramètre environnemental d'un capteur embarqué sur le véhicule mobile en fonction du temps ;
   - le calcul à chaque instant $t$ de la densité de probabilité de présence du véhicule mobile autour de chaque point de la carte, à partir de la série de mesures de variations de position du système de navigation à l'estime, de la série de mesures du paramètre environnemental et de la base de données géographique de référence du paramètre environnemental,
   - la détermination d'une zone de sécurité correspondant à une probabilité de présence supérieure ou égale à un seuil $p$ prédéterminé, et

- la représentation sur un dispositif d'affichage d'une carte géographique de référence du paramètre environnemental de ladite zone de sécurité (12).

**Patentansprüche**

1. Navigationssystem eines beweglichen Fahrzeugs, geeignet zum Bestimmen und Anzeigen einer Sicherheits-Navigationszone des beweglichen Fahrzeugs, wobei das Navigationssystem

   - ein Koppelnavigationssystem (10), das dazu ausgelegt ist, eine Reihe von Messungen der Positionsveränderung des beweglichen Fahrzeugs im Verlauf der Zeit zu machen,
   - einen Rechner (50),
   - einen Speicher (60),
   - einen auf dem beweglichen Fahrzeug angeordneten Sensor (20), der dazu ausgelegt ist, eine Reihe von Messungen eines Umgebungsparameters in Abhängigkeit von der Zeit zu machen;
   - ein elektronisches Kartographiesystem (70), das eine Anzeigevorrichtung aufweist und das mit einer geographischen Bezugsdatenbank (40) des Umgebungsparameters verbunden ist, wobei das elektronische Kartographiesystem ermöglicht, für jeden Punkt einer geografischen Karte den Bezugswert des Umgebungsparameters zu bestimmen,
   
   aufweist,
   - wobei der Rechner (50) mit dem Speicher (60), der geographischen Datenbank (40), dem Koppelnavigationssystem (10) und dem elektronischen Kartographiesystem (70) verbunden ist,
   **dadurch gekennzeichnet, daß**
   - der Rechner (50) dazu ausgelegt ist, von der Reihe von Messungen der Positionsveränderungen des Koppelnavigationssystems, von der Reihe der Messungen des Umgebungsparameters und von der geographischen Bezugsdatenbank des Umgebungsparameters ausgehend, die Dichte der Wahrscheinlichkeit, daß sich das bewegliche Fahrzeug um jeden Punkt der Karte zu jedem Zeitpunkt t befindet, zu berechnen, um daraus eine Sicherheitszone (12) abzuleiten, die einer Anwesenheitswahrscheinlichkeit entspricht, die größer als oder gleich einem vorbestimmten Schwellwert p ist,
   - wobei das elektronische Kartographiesystem (70) dazu ausgelegt ist, die Sicherheitszone (12) auf der Anzeigevorrichtung darzustellen.

2. Navigationssystem gemäß Anspruch 1, bei dem der Rechner (50) dazu ausgelegt ist, eine zweidimensionale Matrix der Abschätzung der Dichte der Anwesenheitswahrscheinlichkeit zu berechnen, die die Wahrscheinlichkeitsdichte der Anwesenheit des beweglichen Fahrzeugs darstellt, wobei jeder Punkt der Matrix der Abschätzung der Dichte der Anwesenheitswahrscheinlichkeit einem Punkt der geografischen Karte entspricht, der durch Homothetie der räumlichen Koordinaten definiert ist, wobei jeder Koeffizient der Matrix der Abschätzung der Dichte der Anwesenheitswahrscheinlichkeit der Wahrscheinlichkeit der Anwesenheit des beweglichen Fahrzeugs in einem Quadrat um diesen Punkt entspricht, und bei dem der Speicher (60) dazu ausgelegt ist, zu jedem Zeitpunkt die Matrix der Abschätzung der Dichte der Anwesenheitswahrscheinlichkeit abzuspeichern.

3. Navigationssystem gemäß Anspruch 2, bei dem der Rechner (50) dazu ausgelegt ist, eine Fehlermatrix mit den gleichen Abmessungen und den gleichen Schritten wie die Matrix der Abschätzung der Dichte der Anwesenheitswahrscheinlichkeit zu berechnen, wobei jeder Koeffizient der Fehlermatrix einer Abschätzung eines oder mehrerer Fehlerhilfsparameter des Systems für jeden Punkt der Karte entspricht, und bei dem der Speicher (60) dazu ausgelegt ist, zu jedem Zeitpunkt die Fehlermatrix abzuspeichern.

4. Navigationssystem gemäß einem der Ansprüche 1 bis 3, bei dem der Rechner (50) dazu ausgelegt ist, zu jedem Zeitpunkt t die Dichte der Anwesenheit des beweglichen Fahrzeugs um jeden Punkt der Karte gemäß den folgenden Bearbeitungsschritten rekursiv zu berechnen:

   - einem Schritt der Initialisierung der Wahrscheinlichkeitsdichte (110), von einem Wert der Ungewißheit der initialen Position ausgehend,
   - einem Schritt der Korrektur der Wahrscheinlichkeitsdichte (120), der bei jeder Erfassung einer Messung des Umgebungsparameters ausgeführt wird,
   - einem Schritt der Ausbreitung der Wahrscheinlichkeitsdichte (150), der bei jeder Erfassung einer durch das Koppelnavigationssystem (10) durchgeführten Messung der Positionsänderung des beweglichen Fahrzeugs erfolgt.

**5.** Navigationssystem gemäß einem der Ansprüche 3 und 4, bei dem der Schritt der Ausbreitung (150) einen Schritt der Berechnung der Ungewißheit der Fortbewegung des beweglichen Fahrzeugs durch Kombination der Ungewißheit der Geschwindigkeit und Ungewißheit der Position des beweglichen Fahrzeugs aufweist und bei dem der Schritt der Ausbreitung einen Schritt der Konvolution der Dichte der Fehlerwahrscheinlichkeit der Fortbewegung mit der Dichte der Anwesenheitswahrscheinlichkeit aufweist.

**6.** Navigationssystem gemäß Anspruch 3 und einem der Ansprüche 4 oder 5, bei dem der Schritt der Ausbreitung der Koeffizienten der Fehlermatrix einen Schritt der Konvolution der Dichte der Fehlerwahrscheinlichkeit der Fortbewegung mit der Fehlermatrix aufweist.

**7.** Navigationssystem gemäß Anspruch 3 und einem der Ansprüche 4 bis 6, bei dem der Rechner dazu ausgelegt ist, einen der Gesamtheit der Punkte der Fehlermatrix gemeinsamen Kovarianzwert zu verwenden, wobei der Kovarianzwert geeignet ist, die Ungewißheit des oder der Hilfsparameter an jedem Punkt der Fehlermatrix darzustellen, und bei dem der Schritt der Korrektur mittels eines linearen Filterprozesses für jeden der Koeffizienten der Fehlermatrix durchgeführt wird, wobei der lineare Filterprozeß einen der Gesamtheit der Koeffizienten gemeinsamen Verstärkungsfaktor aufweist.

**8.** Navigationssystem gemäß einem der Ansprüche 2 bis 7, bei dem der Rechner (50) dazu ausgelegt ist,

- die Gesamtheit der Koeffizienten der Matrix der Abschätzung der Dichte der Anwesenheitswahrscheinlichkeit des beweglichen Fahrzeugs zu sortieren,
- die kleinste Untereinheit von Koeffizienten zu bestimmen, deren Summe größer als $p/\varepsilon^2$ ist, wobei $\varepsilon$ das Rastermaß des geografischen Gitters ist, das den elementaren Abmessungen der Quadrate der Matrix der Wahrscheinlichkeitsdichte entspricht,
- die elementaren Zonen der Matrix um jeden der ausgewählten Koeffizienten zu vereinen,
- daraus wenigstens eine Sicherheitszone (12) abzuleiten, die einer Anwesenheitswahrscheinlichkeit entspricht, die größer als oder gleich einem Wahrscheinlichkeitsschwellwert p ist.

**9.** Navigationssystem gemäß einem der Ansprüche 1 bis 8, bei dem, wenn eine Anzahl nicht zusammenhängender Zonen festgestellt worden ist, die einer Anwesenheitswahrscheinlichkeit von größer als oder gleich einem Schwellwert p entspricht, der Rechner (50) dazu ausgelegt ist, die kleinste konvexe Zone zu bestimmen, die die nicht zusammenhängenden Zonen enthält, und eine konvexe Sicherheitszone zu bilden.

**10.** Navigationssystem gemäß einem der Ansprüche 1 bis 9, bei dem das bewegliche Fahrzeug ein Wasser- oder Unterwasserfahrzeug ist und der auf dem Fahrzeug angeordnete Sensor (20) einen Tiefenmesser, der geeignet ist, die Wasserhöhe unter dem beweglichen Wasser- oder Unterwasserfahrzeug bis zum Grund des Wassers zu bestimmen, oder einen Gravimetriesensor oder eine Meeresstromsonde aufweist.

**11.** Navigationssystem gemäß einem der Ansprüche 1 bis 10, das außerdem eine Vorrichtung (30) zum Vorhersagen der Tidenhubwerte während der Zeit an der geschätzten Position des beweglichen Fahrzeugs aufweist.

**12.** Navigationssystem gemäß einem der Ansprüche 3 bis 11, bei dem die Koeffizienten der Fehlermatrix einer Abschätzung des Fehlers des Tidenhubs entsprechen.

**13.** Navigationssystem gemäß Anspruch 3, bei dem die Koeffizienten der Fehlermatrix einer Abschätzung des Meßfehlers des Umgebungssensors entsprechen.

**14.** Navigationssystem gemäß einem der Ansprüche 1 bis 13, bei dem der Rechner (50) dazu ausgelegt ist, eine Anzahl Sicherheitszonen (12) zu errechnen, die jeweils verschiedenen vorbestimmten Schwellwerten der Anwesenheitswahrscheinlichkeit entsprechen, und bei dem das elektronische Kartographiesystem (70 dazu ausgelegt ist, die Anzahl Sicherheitszonen (12) auf der Anzeigevorrichtung darzustellen.

**15.** Navigationsverfahren eines beweglichen Fahrzeugs, vorzugsweise eines Wasser- oder Unterwasserfahrzeugs, wobei das Verfahren dazu konzipiert ist, eine Sicherheits-Navigationszone (12) des beweglichen Fahrzeugs zu bestimmen und anzuzeigen, wobei das Verfahren

- das Erfassen und Einspeichern einer Reihe von momentanen Geschwindigkeits- und/oder Beschleunigungsmessungen in Abhängigkeit von der Zeit, die von einem Koppelnavigationssystem kommen,

- das Erfassen und Einspeichern einer Reihe von Messungen eines Umgebungsparameters in Abhängigkeit von der Zeit durch einen auf dem beweglichen Fahrzeug angeordneten Sensor,
- von der Reihe von Messungen der Positionsänderungen des Koppelnavigationssystems, der Reihe von Messungen des Umgebungsparameters und der geografischen Bezugsdatenbank des Umgebungsparameters ausgehend, zu jedem Zeitpunkt t das Berechnen der Wahrscheinlichkeitsdichte der Anwesenheit des beweglichen Fahrzeugs um jeden Punkt der Karte,
- das Bestimmen einer Sicherheitszone, die einer Anwesenheitswahrscheinlichkeit von größer als oder gleich einem vorbestimmten Schwellwert p entspricht, und
- das Darstellen einer geografischen Bezugskarte des Umgebungsparameters der Sicherheitszone (12) auf einer Anzeigevorrichtung
aufweist.

**Claims**

1. A navigation system for a mobile vehicle, adapted to determine and display a navigation safety zone for the mobile vehicle, the navigation system comprising:

   - a dead reckoning navigation system (10) adapted to produce a series of measurements of the mobile vehicle position variation over time,
   - a calculator (50),
   - a storage memory (60),
   - an embedded sensor (20) on-board the mobile vehicle adapted to acquire a series of measurements of an environmental parameter as a function of time;
   - an electronic mapping system (70) comprising a display device and connected to a reference geographical data base (40) of the environmental parameter, the electronic mapping system allowing to determine for each point of a geographical map the reference value of the environmental parameter,
   - the calculator (50) being connected to the storage memory (60), to the geographical data base (40), to the dead reckoning navigation system (10) and to the electronic mapping system (70),

   **characterized in that**:

   - the calculator (50) is adapted to calculate the probability density of presence of the mobile vehicle around each point of the map at each instant t, based on the series of position variation measurements of the dead reckoning navigation system, on the series of measurements of the environmental parameter, and on the reference geographical data base of the environmental parameter, to deduce therefrom a safety zone (12) corresponding to a presence probability higher than or equal to a predetermined threshold $p$,
   - the electronic mapping system (70) being adapted to represent said safety zone (12) on the display device.

2. The navigation system according to claim 1, wherein the calculator (50) is adapted to calculate a two-dimension presence-probability-density estimation matrix representing the probability density of presence of the mobile vehicle, each point of the presence-probability-density estimation matrix corresponding to a point of the geographical map defined by homothetic transformation of the spatial coordinates, each coefficient of the presence-probability-density estimation matrix corresponding to the probability of presence of the mobile vehicle in a square around this point, and wherein the storage memory (60) is adapted to record at each instant said presence-probability-density estimation matrix.

3. The navigation system according to claim 2, wherein the calculator (50) is adapted to calculate an error matrix, of same size and same pitch as the presence-probability-density estimation matrix, each coefficient of the error matrix corresponding to an estimation of one or several auxiliary parameters of error of the system for each point of the map and wherein the storage memory (60) is adapted to record said error matrix at each instant.

4. The navigation system according to one of claims 1 to 3, wherein the calculator (50) is adapted to calculate recursively the probability density of presence of the mobile vehicle around each point of the map at each instant t, with the following steps of processing:

   - a step of initialization of the probability density (110) based on an initial position uncertainty value;
   - a step of correction of the probability density (120) performed at each acquisition of a measurement of the environmental parameter;
- a step of propagation of the probability density (150) performed at each acquisition of a measurement of the mobile vehicle position variation produced by the dead reckoning navigation system.

5. The system according to claims 3 and 4, wherein the step of propagation (150) includes a step of calculation of mobile vehicle displacement uncertainty by combination of the mobile vehicle speed uncertainty and position uncertainty and wherein the step of propagation includes a step of convolution of the displacement error probability density with the presence probability density.

6. The system according to claim 3 and one of claims 4 or 5, wherein the step of propagation of the error matrix coefficients includes a step of convolution of the displacement error probability density with the error matrix.

7. The system according to claim 3 and one of claims 4 to 6, wherein the calculator is adapted to use a covariance value common to all the points of the error matrix, said covariance value being suitable to represent the uncertainty of the auxiliary parameter(s) at each point of the error matrix and wherein the step of correction is performed by means of a linear filtering process on each of the coefficients of the error matrix, said linear filtering process having a gain common to all the coefficients.

8. The navigation system according to one of claims 2 to 7, wherein the calculator (50) is adapted to:

- sort all the coefficients of the presence-probability-density estimation matrix of the mobile vehicle,
- determine the smallest sub-set of coefficients whose sum is higher than $p/\varepsilon^2$, where $\varepsilon$ is the pitch of the geographic grid corresponding to the elementary size of the squares of the probability density matrix,
- combine the elementary zones of the matrix around each of the retained coefficients,
- deduce at least one safety zone (12) corresponding to a presence probability higher than or equal to a probability threshold $p$.

9. The navigation system according to one of claims 1 to 8, wherein, being determined a plurality of disjoined zones corresponding to a presence probability higher than or equal to a threshold $p$, the calculator (50) is adapted to determine the smallest convex zone containing the disjointed zones and to form a convex safety zone.

10. The navigation system according to one of claims 1 to 9, wherein the mobile vehicle is a marine or underwater vehicle and the embedded sensor (20) includes a depth sounder adapted to determine the depth of water under the marine or underwater mobile vehicle down to the sea floor, or a gravimetric sensor or a sea current sensor.

11. The navigation system according to one of claims 1 to 10, further including a device (30) for predicting tidal values over time at the estimated position of the mobile vehicle.

12. The navigation system according to claims 3 and 11, wherein the error matrix coefficients correspond to an estimation of the tidal error.

13. The navigation system according to claim 3, wherein the error matrix coefficients correspond to an estimation of the environmental sensor measurement error.

14. The navigation system according to one of claims 1 to 13, wherein the calculator (50) is adapted to calculate a plurality of safety zones (12) corresponding to different predetermined presence probability thresholds, respectively, and wherein the electronic mapping system (70) is adapted to represent said plurality of safety zones (12) on the display device.

15. A navigation method for a mobile vehicle, preferably a marine or underwater vehicle, the method being adapted to determine and display a navigation safety zone (12) for the mobile vehicle, the navigation method comprising

- the acquisition and storage in memory of a series of instantaneous speed and/or acceleration measurements issued by a dead reckoning navigation system, as a function of time,
- the acquisition and storage in memory of a series of measurements of an environmental parameter by an embedded sensor on-board the mobile vehicle as a function of time;
- the calculation at each instant $t$ of the probability density of presence of the mobile vehicle around each point of the map, based on the series of position variation measurements by the dead reckoning navigation system, the series of measurements of the environmental parameter and the reference geographical data base of the environmental parameter,
- the determination of a safety zone corresponding to a presence probability higher than or equal to a predetermined threshold $p$, and
- the representation on a display device of a reference geographical map of the environmental parameter of said safety zone (12).

Fig.1

Fig.2

Initialisation de la densité de probabilité — 110

Recalage de la densité de probabilité à partir des mesures du capteur environnemental — 120

Calcul de la position estimée — 130

Recentrage et réduction du pas de la grille — 140

Propagation de la densité de probabilité — 150

Augmentation du pas de grille — 160

Détermination de la flaque de navigation statistique — 170

Affichage de la flaque de navigation statistique sur le système de cartographie électrique — 180

Fig.3

Fig.4

## RÉFÉRENCES CITÉES DANS LA DESCRIPTION

**Documents brevets cités dans la description**

- US 2012022784 A1
- US 20120022784 A1

**Littérature non-brevet citée dans la description**

- **FREDRIK GUSTAFSSON.** Particle Filter Theory and Practice with Positioning Applications. *IEEE Aerospace and Electronic Systems Magazine,* 2010, vol. 7 (25), 53-81
- **NICLAS BERGMAN ; LENNART LJUNG ; FREDERIK GUSTAFSSON.** Terrain Navigation using Bayesian Statistics. *IEEE Control Systems Magazine,* 1999